Europäisches Patentamt

European Patent Office

Office européen des brevets

(11) Veröffentlichungsnummer: **0 365 899**
**A2**

(12) **EUROPÄISCHE PATENTANMELDUNG**

(21) Anmeldenummer: 89118673.6

(51) Int. Cl.⁵: **F23J 15/00**

(22) Anmeldetag: 07.10.89

(30) Priorität: 22.10.88 DE 3836131

(43) Veröffentlichungstag der Anmeldung:
02.05.90 Patentblatt 90/18

(84) Benannte Vertragsstaaten:
**BE DE ES FR NL SE**

(71) Anmelder: **Linde Aktiengesellschaft**
**Abraham-Lincoln-Strasse 21**
**D-6200 Wiesbaden(DE)**

(72) Erfinder: **Sporer, Josef, Chemie-Ing.**
**Ostendstrasse 1**
**D-8121 Wielenbach(DE)**
Erfinder: **Heisel, Michael, Dr.-Ing.**
**Gistlstrasse 43**
**D-8023 Pullach(DE)**
Erfinder: **Schliebener, Claus, Dr.-Ing.**
**Hugo-Hofmann-Strasse 36**
**D-8021 Strasslach(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Reaktor zur Durchführung von Verbrennungsprozessen.**

(57) Es wird ein Reaktor zur Durchführung von Verbrennungsprozessen, die insbesondere zur Spaltung von Kohlenwasserstoffen dienen, beschrieben. Dabei besteht der Reaktor aus einer Strahlungszone 8 und einer nachfolgend angeordneten Konvektionszone 11, wobei die Strahlungszone 8 mit Brennern 5,6 und die Konvektionszone mit mindestens einem Wärmetauscher 12 zur Dampferzeugung, Produktgaskühlung und/oder Einsatzstoffvorwärmung ausgestattet sind. Um die bei der Verbrennung entstehenden $NO_x$-haltigen Abgase auf einfache, effektive und kostengünstige Weise von $NO_x$ zu befreien, wird vorgeschlagen, daß im Übergangsgebiet 16 von der Strahlungs- zur Konvektionszone eine $NO_x$-Reduktionsmittel-Einspeisestelle 15 und in der Konvektionszone 11 frühestens nach dem ersten Wärmetauscher 12 ein oder mehrere für die Reduktion von $NO_x$ aktive Katalysatorbetten 14 installiert sind.

EP 0 365 899 A2

## Reaktor zur Durchführung von Verbrennungsprozessen

Die Erfindung betrifft einen Reaktor zur Druchführung von Verbrennungsprozessen, die insbesondere zur Spaltung von Kohlenwasserstoffen dienen. Dabei besteht der Reaktor aus einer Strahlungs- und einer nachfolgend angeordneten Konvektionszone wobei die Strahlungszone mit Brennern und die Konvektionszone mit mindestens einem Wärmetauscher zur Dampferzeugung, Produktgaskühlung und/oder Einsatzstoffvorwärmung ausgestattet sind.

Geeignete bekannte Reaktoren für die Spaltung von Kohlenwasserstoffen sind sogenannte Röhrenspaltöfen, oft auch Steamcracker genannt. Insbesondere Äthylen und Propylen werden heute in größtem Maßstab in diesen Reaktoren aus niedrig siedenden Kohlenwasserstoffen wie Äthan bis zu hochsiedenden Kohlenwasserstoffen wie Dieselöl gewonnen. Weiterhin finden die bekannten Reaktoren auch Anwendung bei der Synthesegasherstellung aus Erdgas und/oder Erdöl.

Ein bekannter Reaktor, der zur Äthylengewinnung eingesetzt wird, ist beispielsweise in Ullmanns Enzyklopädie der technischen Chemie 4. Auflage, Band 3, Seiten 330 bis 333 beschrieben.

In diesem Reaktor befinden sich Spaltrohre (Reaktionsrohre) in der Strahlungszone in senkrechter Anordnung während in der Konvektionszone die Einsatzstoffe gegebenenfalls gemischt und vorgeheizt werden. Die Spaltrohre sind so ausgelegt, daß eine Wärmebestrahlung möglichst von allen Seiten erzielt wird, da der Wärmeübergang infolge des hohen Temperaturniveaus zu über 90% durch Wärmestrahlung bewirkt wird. Die notwendige Wärme wird durch Verbrennung von z. B. Heizgas oder durch teilweise Verbrennung der Einsatzstoffe bereitgestellt.

Wie bei jeder Verbrennung fossiler Brennstoffe so entstehen auch hier Stickoxide ($NO_x$) enthaltende Abgase, die aufgrund der zunehmenden Umweltbelastung und damit einhergehender verschärfter Grenzwerte für $NO_x$-Emissionen, nicht mehr an die Atmosphäre abgegeben werden dürfen.

Die bekannten Reaktoren bzw. Spaltöfen weisen aber lediglich einen Kamin auf, der bestenfalls eine einigermaßen akzeptable Verteilung der Stickoxide in der Atmosphäre gewährleistet. Zur Beseitigung der Stickoxide sind daher weitere Maßnahmen erforderlich.

Denkbar wäre es beispielsweise, eine katalytische Entstickung nit $NH_3$ als Reduktionsmittel nachzuschalten, was aber bedeutet, daß das Abgas wiederangewärmt werden muß und Platz für diesen Anlagenteil vorhanden sein muß. Letzteres ist vor allen Dingen auch ein Nachteil im Hinblick auf die Nachrüstung bestehender Anlagen. Überdies wird heute bei Neuanlagen zunehmend Wert auf verringerte Dimensionen gelegt. Ein weiterer Nachteil ist die benötigte Erdgasmenge, die zur Deckung der Wärmeübertragungsverluste nötig ist.

Es ist daher Aufgabe der vorliegenden Erfindung einen Reaktor der eingangs genannten Art so zu verbessern, daß die bei der Verbrennung entstehenden $NO_x$-haltigen Abgase auf einfache, effektive und kostengünstige Weise von $NO_x$ befreit werden.

Diese Aufgabe wird erfindungsgemäß dadurch gelöst, daß im Übergangsgebiet von der Strahlungs- zur Konvektionszone eine $NO_x$-Reduktionsmittel-Einspeisestelle und in der Konvektionszone frühestens nach dem ersten Wärmetauscher ein oder mehrere für die Reduktion von $NO_x$ aktive Katalysatorbetten installiert sind.

Bevorzugtes Reduktionsmittel für die Entstickung ist $NH_3$. Bei nachgeschalteten Entstickungsanlagen wurde das $NH_3$ in einen Trägergasstrom wie z.B. Luft oder Dampf eingemischt, zusammen mit diesem dem Hauptgasstrom zugemischt und mit Hilfe eines statischen Mischers weiterverteilt. Dabei lag die Temperatur des Trägergases sowie des Hauptgasstromes in der Größenordnung der am Katalysator notwendigen Temperatur zwischen $200^\circ$ und $400^\circ$ C.

Bisher wurde nur bezüglich der Reduktionsmittel-Verteilung optimiert. Es blieb außer Betracht, daß auch chemische Reaktionen durch die Art und den Zeitpunkt der Reduktionsmittel-Eindüsung in bevorzugter Weise ablaufen können. Bei Temperaturen von $900^\circ$ bis $1000^\circ$ C findet nämlich bereits eine Umsetzung von $NO_x$ mit $NH_3$ statt, allerdings aufgrund nicht idealer Zustände nur bis zu einem meist nicht ausreichenden Enstickungsgrad. Eine Überdosierung des Reduktionsmittels gewährleistet zwar eine bessere Entstickung, dafür muß aber eine erhöhte Reduktionsmittel-Emission in Kauf genommen werden, was aber z.B. im Fall von $NH_3$ nicht zulässig ist.

Ausgehend von diesen Überlegungen erfolgt erfindungsgemäß die Eindüsung des Reduktionsmittel-Trägergasgemisches kurz hinter den Brennern d. h. bei hoher Temperatur zwischen z.B. $900^\circ$ und $1000^\circ$ C. Dort reagiert ein Teil des $NO_x$ bereits mit beispielsweise $NH_3$ unter Bildung von $H_2O$ und $N_2$. Die nachfolgenden Wärmetauscher, wie z. B. Rohrbündelwärmetauscher, dienen dann als statische Mischer zur optimalen Verteilung des $NH_3$.

Heutzutage sind die Konvektionszonen der Reaktoren weitestgehend mit Wärmetauscherbündeln ausgefüllt, so daß dort nirgendwo Platz für die Installation von statischen oder dynamischen Mischern zur Vermischung des Reduktionsmittel-Trägergasgemisches mit dem Hauptgasstrom gegeben ist. Überdies würden zusätzliche dynamische Mischer zusätzliche Energiekosten verursachen. Bestehende Reaktoren sind aus diesen Gründen bislang nicht nachrüstbar gewesen.

Eine sehr gute Mischung ist aber Voraussetzung für eine gute Entstickung, besonders bei geringen $NO_x$-Gehalten im Abgas, weil da wenige Mole $NO_x$ und $NH_3$ auch tatsächlich für die Reaktion zusammenkommen müssen. Durch die Eindüsung von $NH_3$ weit vor dein ersten Katalysatorbett wird die Mischung wesentlich verbessert.

Mit Vorteil besteht die $NO_x$-Reduktionsmittel-Einspeisestelle aus einem Jetgassystem, das die Einmischung des Reduktionsmittels mit Trägergas bewirkt. Auf diese Weise können $NO_x$-Strähnen aufgelöst sowie Temperatur- und Konzentrationsunterschiede verringert werden, was sich auch günstig auf den Wirkungsgrad der nachfolgenden Wärmetauscher auswirkt.

Gemäß einer bevorzugten Ausgestaltung des erfindungsgemäßen Reaktors ist eine zweite $NO_x$-Reduktionsmittel-Einspeisestelle vor dem ersten Katalysatorbett vorgesehen. Damit ergibt sich eine weitere Regelmöglichkeit zur optimalen $NO_x$-Umsetzung bei gleichzeitig minimalem Reduktionsmittel-Schlupf.

Grundsätzlich ist es möglich, an der zweiten $NO_x$-Reduktionsmittel-Einspeisestelle ein anderes Reduktionsmittel als zuvor zuzuführen. Denkbar ist z. B. als erstes Reduktionsmittel $NH_3$ sowie als zweites $H_2$ oder ungesättigte Kohlenwasserstoffe.

Weitere geeignete $NO_x$-Reduktionsmittel sind CO und ein Gemisch von $H_2$ und CO.

Auch bei nur einer Einspeisestelle ist die Betriebssicherheit gegenüber den bekannten Reaktoren schon erheblich verbessert, da etwa bei einem völligen Ausfall eines Systems (z.B. Katalysatordesaktivierung oder kein $NO_x$-Umsatz bei hoher Temperatur, da Düsenauslegung völlig falsch) noch eine Teilentstickung erfolgt.

Bei dem erfindungsgemäßen Reaktor kann es sich auch als günstig erweisen, mittels einer Bypass-Leitung einen Umgang um die Katalysatorbetten zu bilden, um die Betten ohne Betriebsunterbrechung austauschen zu können. Somit ist während eines Katalysatorwechsels noch eine Entstickung in tolerierbaren Grenzen gewährleistet.

In einer äußerst zweckmäßigen Ausgestaltung des erfindungsgemäßen Reaktors sind die Katalysatorbetten als Schüttgut-Katalysatoren ausgebildet, was eine Verbesserung der Gasverteilung bewirkt und turbulente Strömung im Katalysatorbett erzeugt.

Vorteilhaft sind außerdem Katalysatorbetten bestehend aus Katalysatorwaben, wobei durch wechselweises Abdecken der Zwischenräume eine schachbrettartige Anordnung entsteht, die für eine ausreichend hohe Strömungsgeschwindigkeit sorgt.

Als besonders günstig im Hinblick auf die Vermischung hat sich der Einbau von Rohrbündelwärmetauschern in der Konvektionszone erwiesen.

Gemäß einer weiteren Ausgestaltungsform des erfindungsgemäßen Reaktors ist vorgesehen, daß zusätzlich oder anstelle der für die $NO_x$-Reduktion aktiven Katalysatorbetten ein Katalysatorbett zur Oxidation von eventuell im Überschuß vorhandenem $NH_3$ in der Konvektionszone untergebracht ist.

Zur Oxidation von Überschuß-$NH_3$ muß bei nahezu stöchiometrischer Verbrennung unter Umständen ein Oxidationsmittel wie z.B. $O_2$ zugegeben werden.

Insgesamt hat der erfindungsgemäße Reaktor die Vorteile der höheren Betriebssicherheit, des reineren Abgases gegenüber nachgeschalteten Entstickungsreaktoren bei gleichzeitig verringertem Katalysatorvolumen und geringerem Druckverlust im Reaktor, d.h. größtmöglicher Wirtschaftlichkeit.

Dabei ist zu beachten, daß durch die Lage der ersten $NO_x$-Reduktionsmittel-Einspeisestelle und die in diesem Bereich stattfindende Teilumsetzung des $NO_x$ geringere $NO_x$-Emissionen bei gleichem Reduktionsmittel-Schlupf erzielt werden.

Die Teilumsetzung des $NO_x$ bewirkt auch das verringerte Katalysatorvolumen, da auf diese Weise der Katalysator praktisch ein Regler ist, der die Einhaltung vorgegebener $NO_x$-Emissionswerte garantiert und so die Schwankung der Teilumsetzung des $NO_x$ kompensiert, welche durch die Schankungen im Temperaturverhältnis am Übergang von der Strahlungs-zur Konvektionszone hervorgerufen werden.

Der erfindungsgemäße Reaktor ist einsetzbar bei allen Verbrennungsprozessen, bei denen $NO_x$-haltige Abgase entstehen wie z.B. in Kraftwerken und Müllverbrennungsanlagen. Allerdings ist er besonders geeignet zum Einsatz bei der thermischen Spaltung von Kohlenwasserstoffen wie zB. Äthan, Naphta oder Hydro-Cracker-Rückständen, da die dabei verwendeten Brennstoffe, oft die Einsatzstoffe selbst, in der Regel schwefelfrei sind. Das läßt eine Verbrennung auf höherem Temperaturniveau zu, was aber gegebenenfalls auch zu erhöhter $NO_x$-Bildung führt.

Nachstehend sei der erfindungsgemäße Reaktor anhand eines schematisch dargestellten Ausführungsbeispiels näher erläutert.

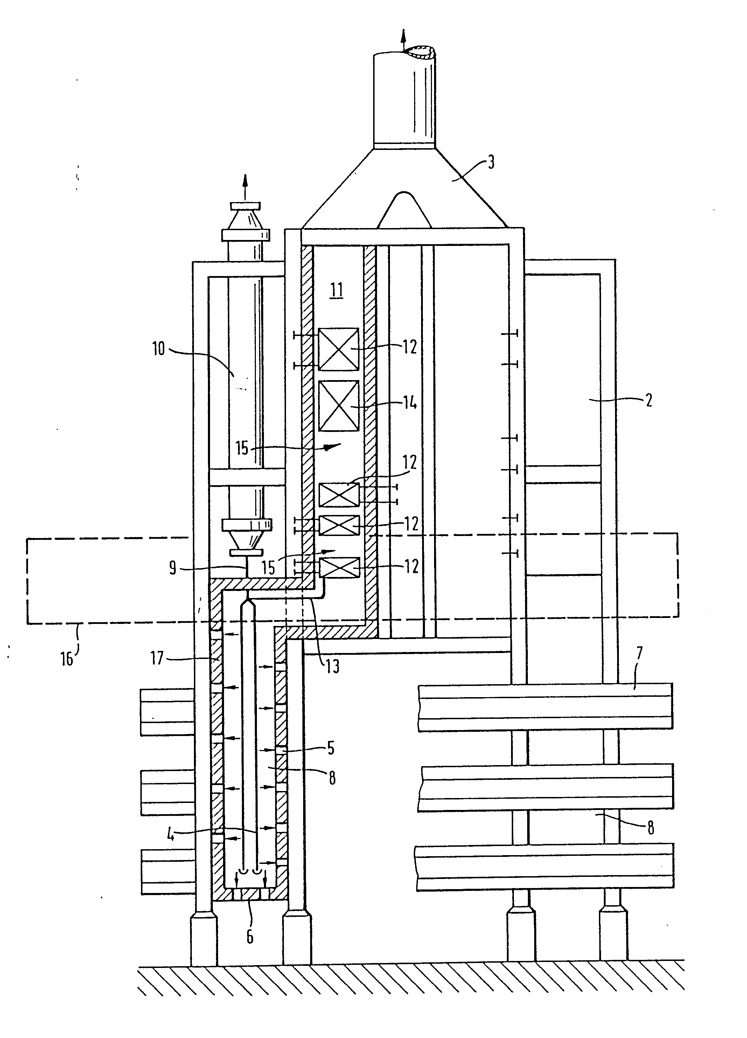

Gemäß Figur 1 wird ein erfindungsgemäßer Rektor zur Spaltgaserzeugung durch thermische Spaltung von Naphta vorgestellt. Der Reaktor besteht in diesem Ausführungsbeispiel aus zwei parallelgeschalteten Reaktorzellen, wobei nur eine Reaktorzelle näher beschrieben bzw. dargestellt ist.

Die Reaktorzellen (1) und (2) besitzen einen gemeinsamen Kamin (3) zur Abgabe der Abgase aus der Verbrennung an die Atmosphäre.

Die Beheizung der Spaltrohre (4) erfolgt durch Wand (5)- und Decken(6)-brenner, wobei die Wandbrenner (5) über Balkone (7) zu Wartungsarbeiten zugänglich sind.

In der Strahlungszone (8), welche im wesentlichen den unteren Teil des Reaktors ausmacht, findet die eigentliche Spaltung des Naphta statt. Verdampfter Einsatz wird dabei in den Spaltrohren (4) an den Brennern (5, 6) vorbeigeführt, die das Gas auf die erforderliche Spalttemperatur erhitzen. Entsprechend den gewünschten $C_3H_6/C_2H_4$-Verhältnissen verläßt das Spaltgas über eine Leitung (9) die Strahlungszone (8) mit Temperaturen zwischen 800 und 870°C und wird in einem sich anschließenden Wärmetauscher (10), dem sogenannten Spaltgaskühler, indirekt bei gleichzeitiger Hochdruckdampfgewinnung auf Temperaturen zwischen 300 und 500°C abgekühlt und sodann einer nicht dargestellten Weiterverarbeitung zugeführt.

Der obere Teil des Reaktors stellt die Konvektionszone (11) dar, welche mit Wärmetauschern (12) ausgestattet ist. In den Wärmetauschern (12) wird das anderweitig von Umgebungstemperatur auf ca. 120°C vorgewärmte Naphta weiter angewärmt. Ebenso erfolgt dort die Anwärmung des Speisewassers, die Überhitzung des Prozeßdampfes und die Verdampfung des Naphta. Vor der endgültigen Verdampfung wird dem Naphta der Prozeßdampf zugemischt (nicht dargestellt). Dadurch wird eine Partialdruckerniedrigung der Kohlenwasserstoffe erreicht und somit eine hohe Äthylenausbeute und eine längere Laufzeit des Reaktors. Das so entstehende Kohlenwasserstoffdampfgemisch tritt nach der restlichen Naphtaverdampfung in die Strahlungszone (8) ein (Leitung 13).

Die Konvektionszone (11) wird durch die aus dem unteren Teil abziehenden heißen Verbrennungsabgase beheizt. Da die Verbrennungsabgase nach dem Wärmetausch direkt über den Kamin (3) all die Atmosphäre abgegeben werden, ist zur $NO_x$-Entfernung ein Katalysatorbett (14) vor dem letzten Wärmetauscher (12) in Strömungsrichtung installiert. Das erforderliche Reduktionsmittel, in diesem Fall $NH_3$, wird an zwei Stellen (15) - in einen Trägergasstrom eingemischt - zugegeben. Dabei erfolgt die erste Eindüsung bei 900°C und die zweite bei 400°C, sodaß unmittelbar nach dem ersten Wärmetauscher (12) in Strömungsrichtung schon eine Teilumsetzung des $NO_x$ stattfindet.

In der Strahlungszone (8) beträgt die Temperatur 1230°C, im Übergangsgebiet (16) zwischen Strahlungs-und Konvektionszone (gestrichelt dargestellt) noch zwischen 1200 und 900°C. Die Verbrennungsabgase und zugemischtes nicht umgesetztes $NH_3$ werden sodann in der Konvektionszone (11) weiter stufenweise auf eine für die katalytische Entstickung geeignete Temperatur wie zum Beispiel 400°C abgekühlt, nochmals mit $NH_3$ (15) vermischt, über das Katalysatorbett (14) geleitet und anschließend bis auf 120°C (Wärmetauscher 12)abgekühlt und durch den Kamin (3) abgeleitet.

Ferner ist der Reaktor mit einer Ausmauerung (17) versehen.

## Ansprüche

1. Reaktor zur Durchführung von Verbrennungsprozessen, die insbesondere zur Spaltung von Kohlenwasserstoffen dienen, bestehend aus einer Strahlungs- und einer nachfolgend angeordneten Konvektionszone, wobei die Strahlungszone mit Brennern und die Konvektionszone mit mindestens einem Wärmetauscher zur Dampferzeugung, Produktgaskühlung und/oder Einsatzstoffvorwärmung ausgestattet sind, dadurch gekennzeichnet, daß im Übergangsgebiet von der Strahlungs- zur Konvektionszone eine $NO_x$-Reduktionsmittel-Einspeisestelle und in der Konvektionszone frühestens nach dem ersten Wärmetauscher ein oder mehrere für die Reduktion von $NO_x$ aktive Katalysatorbetten installiert sind.

2. Reaktor nach Anspruch 1, dadurch gekennzeichnet, daß eine zweite $NO_x$-Reduktionsmittel-Einspeisestelle vor dem ersten Katalysatorbett vorgesehen ist.

3. Reaktor nach Anspruch 1 oder 2, dadurch gekennzeichnet, daß die Katalysatorbetten als Schüttgut-Katalysatoren ausgebildet sind.

4. Reaktor nach Anspruch 1 oder 2, dadurch gekennzeichnet, daß die Katalysatorbetten aus Katalysatorwaben bestehen, wobei durch wechselweises Abdecken der Zwischenräume eine schachbrettartige Anordnung entsteht.

5. Reaktor nach einem der Ansprüche 1 bis 4, dadurch gekennzeichnet, daß eine Bypass-Leitung einen Umgang um die Katalysatorbetten bildet, um die Betten ohne Betriebsunterbrechung des Reaktors austauschen zu können.

6. Reaktor nach einem der Ansprüche 1 bis 5, dadurch gekennzeichnet daß die Wärmetauscher in der Konvektionszone als Rohrbündelwärmetauscher ausgebildet sind.

7. Reaktor nach Anspruch 1, dadurch gekennzeichnet, daß die $NO_x$-Reduktionsmittel-Einspeisestelle aus einem Jetgassystem besteht.

8. Reaktor nach Anspruch 1 oder 2, dadurch gekennzeichnet, daß zusätzlich oder anstelle der für die $NO_x$-Reduktion aktiven Katalysatorbetten ein Katalysatorbett zur Oxidation von eventuell im Überschuß vorhandenen $NH_3$ in der Konvektionszone untergebracht ist.